Europäisches Patentamt

European Patent Office

Office européen des brevets

(19)

(11) Publication number: **0 051 333**
A1

## (12) EUROPEAN PATENT APPLICATION

(21) Application number: **81201172.4**

(22) Date of filing: **22.10.81**

(51) Int. Cl.³: **F 24 J 3/02**
**A 01 G 9/24**

(30) Priority: **31.10.80 BE 2058837**
**18.11.80 BE 2058858**

(43) Date of publication of application:
**12.05.82 Bulletin 82/19**

(84) Designated Contracting States:
**AT CH DE FR GB IT LI LU NL SE**

(71) Applicant: **Wellens, Eugeen Henri**
**Azaleastraat 29**
**B-9220 Merelbeke(BE)**

(72) Inventor: **Wellens, Eugeen Henri**
**Azaleastraat 29**
**B-9220 Merelbeke(BE)**

(74) Representative: **Donné, Eddy**
**M.F.J.Bockstael Arenbergstraat 13**
**B-2000 Anvers(BE)**

(54) **Equipment for the absorption of solar heat.**

(57) Equipment for absorbing solar heat, characterized in that it consists mainly of two faces (2,3) placed at a relatively large distance from each other which air- and watertightly seal the space formed in-between, occasionally in combination with side-walls (4), in said space means allowing to sprinkle or to spray a heat-carrying fluid therein, and means allowing to collect and to carry off said fluid.

Fig. 1

EP 0 051 333 A1

1

"Equipment for the absorption of solar heat"

This invention relates to an equipment for the absorption of solar heat, especially an equipment in which this solar heat is absorbed by a heat-carrying fluid that transfers the absorbed heat directly or indirectly to a fluid, stored in a tank, which can consist in the actual heat-carrying fluid itself, the object being to further use this stored and thus heated fluid as such or as a means to heat machine parts, rooms and the like.

Equipments of that kind are already known but only consist in an inclined face, heated by sunlight and along which a thin water-curtain is allowed to flow, which curtain absorbs the heat absorbed by the face and carries it along to a storage tank or the like.

In order to make the efficiency of these known equipments as favourable as possible, the above-mentioned face is made as dark as possible, so that it can absorb much heat, the underside of the face being isolated.

At the same time a transparent face, for instance made of glass, is provided at a small distance of the above-mentioned face.

It is known, however, that the efficiency of such equipments is extremely low so that, even with today's high fuel prices, they are economically not justified.

This invention relates to an equipment in which provisions of such a kind are made, which constitute the real object of the invention, that the efficiency of it, compared to that of known equipments, becomes very high.

A first object of this equipment consists in the fact that the above-mentioned inclined face, as opposed to known equipments or so-called solar panels, is placed on a relatively great distance from the above-mentioned transparent face, both faces in such a way that between them a space is formed wherein the air is strongly heated by the sunlight, especially by the direct sun-rays, on the one hand, and wherein the said inclined face is heated as well, on the other hand.

A second object of the equipment according to the invention is that the said heat-carrying fluid, which in the case of known solar panels is displaced as a water-curtain along the heat-absorbing inclined face applied in such solar panels, according to the present invention in refined form, for instance by spraying, sprinkling or the like is brought into the said space so that per unit of weight it carries along a considerably greater amount of heat than when an ordinary water-curtain is used in which, in addition, this fluid thereafter drops onto the said inclined face, occasionally absorbing some additional heat from the said inclined face while flowing away.

For that purpose the equipment according to the invention mainly consists in two faces disposed on a relatively great distance from each other, which air- and watertightly seal the space formed in-between, possibly in combination with side-walls; within this space means that allow to sprinkle or spray a heat-carrying fluid into it and means that allow to collect and carry off said fluid.

It is clear that this equipment can exist on itself, in the form of solar elements that are displaceable or not, or can be constructed as a roof-covering of houses and the like wherein in a very particular application this equipment constitutes the object of the roof of a hot-house or green-house, being able to be provided not only in the roof of such hot-house or the like, but in the walls of it as well.

A further particular application of the device according to the invention is the use of it to collect heat, on the one hand, and to use this heat on the appropriate moment to reheat the house, hot-house or the like in question via this device, on the other hand.

Indeed, experiments have shown that it is possible to store very advantageously a great amount of heat from the sunlight during the day, at least along the roof-surface, in a heat-carrying fluid in general, and to use the heat of this heat-carrying fluid again, for instance at night to maintain or realise a determined temperature in the involved house, green-house or the like.

Although the said equipment is mainly intended for absorbing solar heat and for storing a fluid heated by this absorbed solar heat which can occasionally be used later on to heat the said space, it is clear that such equipment can as efficiently be used to cool such space with the result that the room, situated under or next to such space, house or the like is also cooled.

For this purpose it is sufficient to choose the heat-carrying fluid in such a way that it carries along more heat than the heat present in the said space, room, house or the like, that is situated under or next to such space, whereby a cooling effect is brought about.

It is also clear that, either to heat or to cool as efficient-

0051333

ly as described before, a heat-carrying fluid can be sprinkled
or sprayed, which depending on the intention is either warmer
than the space in which it is introduced, or is colder, in
such a way that either a heating or a cooling of this space is
obtained and as a result thereof a heating or a cooling of the
house, room or the like, that is situated under or next to
such a space.

In a highly efficient application either a fluid that is
previously lead through a suitable cooling tower, occasionally
specially provided therefor, can be used for cooling, whereas
in the second case any fluid can be used, which in the case of
cooling can also originate from any cooling installation,
while, if such fluid is used as a heating-element it can be
formed by so-called waste waters, which carry relatively great
amounts of heat as for instance in the case of waste- or
cooling-waters from electric power stations, nuclear power
stations and the like.

Also well-water or the like can be used for this purpose.

It is clear that in this way the enormous energy carried off
by such waste waters or the like can be used very efficiently.
With the purpose of better showing the characteristics of the
invention a few preferred embodiments of a device according to
the invention are described hereinafter in a very schematic
way with reference to the accompanying drawings in which :

> Figure 1 represents in a schematic way a perspective view
> of an equipment in the form of a solar element according
> to the invention;
> Figure 2 represents in a schematic way a vertical cross-
> section of a house, green-house or the like of which the
> roof has been designed in accordance with the invention;
> Figure 3 represents an alternative of Figure 2.

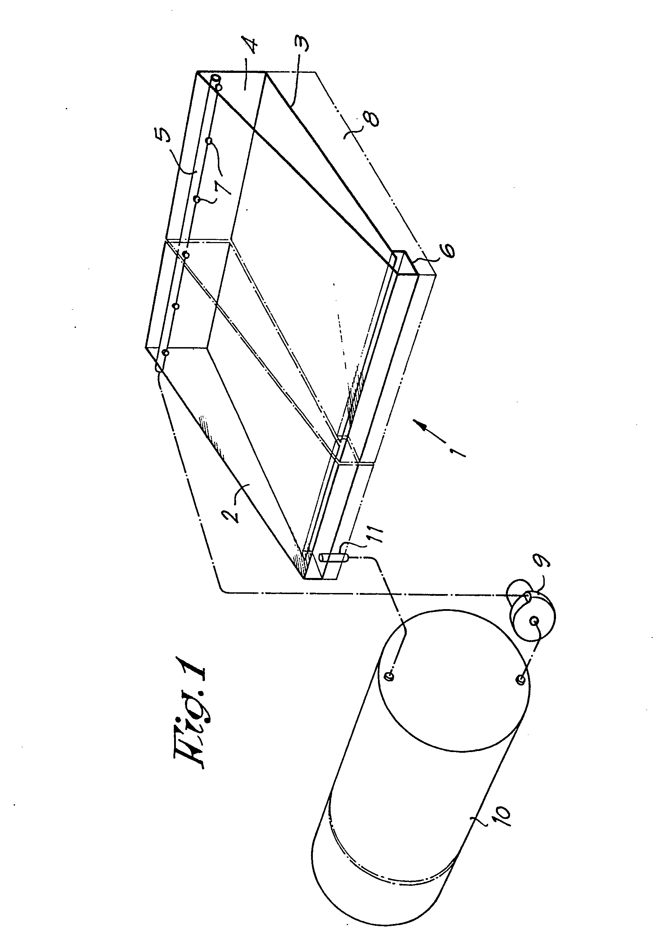

As represented in Figure 1 a solar element 1 according to the invention mainly consists in a transparent upper face 2; an underface 3 that is transparent or not; sidewalls 4 that are transparent or not; a supply 5 for the heatcarrying fluid and a discharge 6 for this fluid.

The transparent upper face 2 is preferably placed obliquely with a slope that does not only secure a suitable discharge of the rain-water but is also chosen in such a way that it transmits an amount of solar radiation as large as possible.

The under face 3, which can be made of any material, is parallel to the upper face 2 or is not.

In a preferred embodiment, however, the slope of this face 3 is smaller than that of face 2 in order to make the distance between the upper edges of the faces 2-3 as large as possible and yet to secure an efficient discharge of the heat-carrying fluid to one side of the element.

At least in one place and preferably as high as possible a pipe 5 is lead through the space, formed by the walls 2 and 4, on which several sprinklers 7 are placed that allow to bring the heat-carrying fluid in small amounts into the solar element where the heat in this element is very efficiently absorbed and carried off.

The thus distributed fluid then falls onto the face 3 and is collected in the gutter 6 to be carried off, whereby occasionally, depending on the nature of the under face, which among other things is determined by the choice of material and by the colour of this face, additional heat is given up by the latter to the already heated fluid.

Such element 1 on itself can be used to be mounted on a roof or the like, on its own or in combination with other elements, such element being able of being provided at the bottom with a suitable support 8 that is occasionally made of an isolating material.

As represented in Figure 1 the pipe 5 is connected, via a pump 9, to a storage tank 10 that is also connected to the gutter 6 by means of a pipe 11.

The heat-carrying fluid, for instance water, is thus pumped from the tank 10 and is brought into the element 1 via the sprinklers or spray-nozzles 7; thereafter the heat-carrying fluid automatically flows back to the lower tank 10, so forming a closed circuit.

The thus heated fluid, mostly water, can then be used either for household applications, or for heating tools, rooms or the like, the heat-carrying fluid being used directly or indirectly.

When the elements according to Figure 1 are for instance used as roof-covering that is not fitted with the isolation 8, the elements can be used during the day to store heat, so that when cooling is taking place, for instance at night, the heated fluid gives up its heat to the solar elements which then via the face 3 provide heating of the room or the like involved that is covered by these elements.

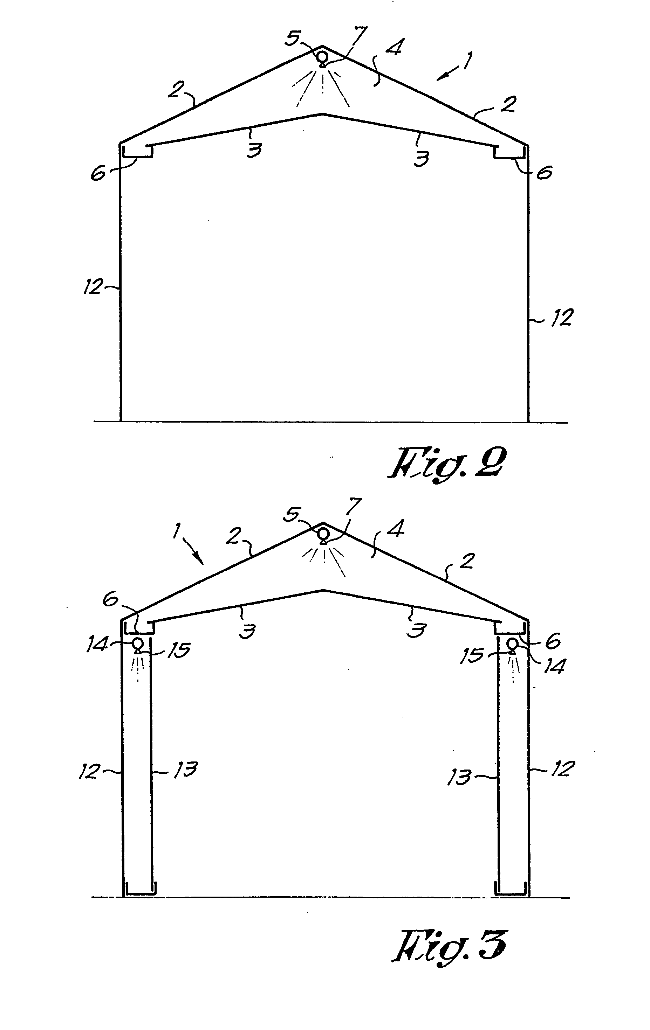

In Figure 2 an embodiment is represented whereby the solar element is in one piece and as such forms the permanent roof-covering of a house, whereas in Figure 3 a possible embodiment is represented wherein the walls 12 are as well fitted with an additional inner wall 13 between which a pipe 14 with spray-nozzles or sprinklers 15 is provided and underneath a receiving gutter 16 is mounted.

Needless to say that such equipment according to the embodiment in the form of juxtaposed elements as well as in the form represented in the Figures 2 and 3 can extremely efficiently be used in hot-houses and green-houses.

Indeed here, as is known, at least during the night some additional heating for maintaining a suitable temperature is necessary, whereas during the day in most cases ventilation windows have to be opened to carry off the heat and to keep both temperature and degree of humidity at a suitable level whereby much heat is lost.

Well, according to the invention heating of the green-house will not run higher than necessary in the daytime because excessive heat is absorbed by the said heat-carrying fluid whereas, when the sun does not heat anymore, this heated fluid is used to counteract cooling of the hot-house, or to heat the hot-house.

It is clear that in the case of such special application the nature of the faces has to be determined precisely in order to obtain that the heat remains trapped to a maximum degree, and that any radiation necessary for a suitable plant-growth is transmitted as well.

Evidently, the present invention is not limited to the embodiments described as examples and represented in the accompanying drawings, but the equipment or solar element according to the invention can be realised in many different forms and dimensions without departing from the scope of the invention.

Claims.

1.- Equipment for absorbing solar heat, characterized in that it consists mainly of two faces (2-3) placed at a relatively large distance from each other which air- and watertightly seal the space formed in-between, occasionally in combination with side-walls (4), in said space means allowing to sprinkle or to spray a heat-carrying fluid therein, and means allowing to collect and to carry off said fluid.

2.- Equipment according to claim 1, characterized in that both said faces (2-3) are inclined.

3.- Equipment according to any of claims 1 and 2, characterized in that a distance remains at the bottom between both faces (2-3) which is sufficient for freely carrying off the heat-carrying fluid, whereas towards the top the said faces (2-3) strongly diverge.

4.- Equipment according to any of the foregoing claims, characterized in that at least in the highest part of said space a pipe (5) is provided extending preferably over its whole length and which at regular distances carries sprinklers or spray nozzles (7).

5.- Equipment according to any of the foregoing claims, characterized in that a discharge gutter (6) is provided at the place where the said faces (2-3) are the closest to one another under the bottom face.

6.- Equipment according to any of the foregoing claims, characterized in that the top face (2) is made of a transparent material.

7.- Equipment according to any of the foregoing claims, characterized in that the bottom face (3) is made of a transparent or at least light-transmitting material.

8.- Equipment according to any of the foregoing claims, characterized in that the heat-carrying fluid is water.

9.- Equipment according to any of the foregoing claims, characterized in that it is formed by loose elements (1) with limited surface area, which occasionally can be placed in one another's extension.

10.- Equipment according to claim 9, characterized in that an isolating layer (8) is provided under each element.

11.- Equipment according to any of claims 1 to 8, characterized in that it forms the actual roofcovering of a house, green-house or the like.

12.- Equipment according to any of the foregoing claims, characterized in that the said pipe (5) is connected to a storage tank (10) having sprinklers or spray nozzles (7), said pipe being provided with a pump (9), whereas said gutter (6) is also connected to the said tank (10) by means of a second pipe (11).

13.- Equipment for absorbing solar heat according to any of the foregoing claims, characterized in that it can be used as cooling device.

14.- Equipment according to claim 13, characterized in that the heat-carrying fluid comes from a cooling tower or the like.

15.- Equipment for absorbing solar heat according to any of the foregoing claims, characterized in that for heating or cooling the abovesaid space use is made of waste waters, well-water or the like, whose temperature is higher or lower than the temperature in the said space.

Fig. 1

Fig. 2

Fig. 3

**0051333**

European Patent Office

**EUROPEAN SEARCH REPORT**

Application number

EP 81 20 1172.4

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | US – A – 3 314 415 (ROWEKAMP) | | F 24 J 3/02 |
| Y | * fig. 1 * | 1 | A 01 G 9/24 |
| A | * column 2, lines 18 to 21, 42 to 49 * | 6,8,10 | |
| | GB – A – 2 031 580 (NOVEX) | | |
| Y | * fig. 2, reference no. 6,10 * | 1 | |
| Y | * page 1, lines 124 to 139; page 2, lines 29 to 33; page 1, line 60 to 61; page 2, lines 40 to 42; page 2, lines 43 to 46; fig. 1, reference no. 3,4 * | 2,4, 6-8, 11,13 | TECHNICAL FIELDS SEARCHED (Int.Cl. 3) |
| A | US – A – 4 173 212 (WHITCOMB) * column 2, lines 23 to 32; column 3, lines 14 to 23; column 1, line 68 to column 2, line 7; column 2, lines 16 to 18; fig. 1, 3, positions 18,20 * | 1,2, 6-8, 11,12 | F 24 J 3/00 A 01 G 9/00 |
| A | DE – U1 – 7 905 382 (REINHOLD) * complete document * | 1 | |
| A | EP – A1 – 0 005 103 (COMMISSARIAT A L'ENERGIE ATOMIQUE) | | CATEGORY OF CITED DOCUMENTS |

X The present search report has been drawn up for all claims

| Place of search | Date of completion of the search | Examiner |
|---|---|---|
| Berlin | 27-01-1982 | PIEPER |

EPO Form 1503.1  06.78